# EUROPEAN PATENT SPECIFICATION

(11) **EP 3 817 995 B1**
(45) Date of publication and mention of the grant of the patent: **25.06.2025**
(21) Application number: 19756249.9
(22) Date of filing: 05.07.2019
(51) Int. Cl.: B65G 21/14, B65G 13/12

(54) **EXTENSIBLE ROLLER CONVEYING DEVICE**
AUSZIEHBARE ROLLENFÖRDERVORRICHTUNG
DISPOSITIF DE TRANSPORT À ROULEAUX EXTENSIBLE

(30) Priority: 06.07.2018 IT 201800007001
(43) Date of publication of application: 12.05.2021
(73) Proprietor: Sacmi Tech S.p.A., 40026 Imola (BO) (IT)
(72) Inventor: VALENTINI, Marco, 40026 IMOLA (BO) (IT)
(74) Representative: Studio Torta S.p.A.
(86) International application number: PCT/IB2019/055756
(87) International publication number: WO 2020/008430

(56) References cited:
- DE-A1- 102016 108 449
- DE-U1- 8 628 896
- JP-A- H09 328 217
- JP-U- S60 193 310
- US-B2- 7 395 918

## Description

### CROSS-REFERENCE TO RELATED APPLICATIONS

This patent application claims priority from Italian patent application no. 102018000007001 filed on 06/07/2018

### TECHNICAL FIELD

The present invention relates to a roller conveying device, a connection machine, and a plant for the production of articles.

The present invention also relates to a method to extend a conveying device.

The present invention finds advantageous application in the conveyance of tiles between a manufacturing machine, for example a ceramic press, and a conveyor line, to which the following specification will make explicit reference without thereby losing generality.

### BACKGROUND OF THE INVENTION

Normally, a roller conveying device that picks up products from a manufacturing machine and deposits them on a conveyor line, or on another machine, is equipped with a set of manually removable rollers arranged in a portion of the conveying device that picks up the products coming out of said manufacturing machine. The removable rollers allow the portion of the conveying device that picks up the products coming out of the manufacturing machine to be moved closer and/or further away.

In the ceramic industry, this occurs when a roller conveying device is interposed between a ceramic press, which is configured to compact a powder ceramic material to form raw tiles (that are still unfired), and a subsequent conveyor line. The ceramic press is usually provided with moulds, the replacement of which allows the format or quantity (in the case of multiple formats) of the tiles produced to be changed. As the format changes, the size of the mould also changes (both in the case of single formats and in the case of multiple formats).

The position of a first roller, arranged in the portion of the conveying device that picks up the products coming out of the press, must therefore be adapted to the variation of the format, so as to ensure that, once manufactured, the tiles coming out of the press have an adequate support close to the mould. In fact, if the first roller is too far from the mould of the press, there is a risk of damaging the tiles (still unfired and therefore fragile).

Usually, when the format changes, rollers are manually added or removed in the vicinity of the ceramic press mould. However, these operations are not easy and quick to carry out, since the adjustment of the manually assembled rollers is extremely time-consuming and usually complex from the mechanical point of view due to the many hindrances generated by the ceramic press and the protections (partitions, screens, etc.) necessary near large machines to safeguard the operators. Consequently, it is common practice to move the roller conveying device so as to adapt it to the format of the press mould and then arrange the first roller in an optimal position with respect to the mould and the press.

Moreover, normally, the roller conveying device is provided, in the vicinity of the ceramic press, with a movable system, which allows the roller conveying device to be moved in order to free up space and allow ordinary and extraordinary maintenance operations, replacement of parts, format changes, etc. However, particularly in the case of large machines (such as ceramic presses), the space required to easily carry out maintenance or mould replacement operations is very large. This means that the space made available by the movable system of the roller conveying device is often insufficient to allow the assigned personnel to operate easily, or, in order to make a sufficient space available, the movable system of the roller conveying device must have a size such as to require very large spaces for its movement.

Some solutions, such as the one described in Italian patent no. 1342160, however, propose complex and expensive systems in order to allow space occupied by the roller conveying device to be freed, such as to allow both ordinary and extraordinary maintenance operations and format changes to be carried out easily.

Document US 7395918 describes an extensible conveying device, which includes a portion with a fixed length and one with a variable length, which allows rollers to be added to or removed from a conveying path. As described in US 7395918, the extensible conveying device comprises a number of individually motorized rollers, by means of solutions displaying an internal motor in each motorized roller. However, the device proposed by US 7395918 has several drawbacks, among which we mention: high construction and operating costs; relatively frequent maintenance interventions; the inability to convey items under a certain size; a relatively large number of items damaged during conveyance.

Document DE102016108449A1 discloses a transfer device for coupling a process device to a stationary station for the purpose of inward and/or outward transfer of piece goods. In such a device, at least one conveyor device has at least one magnetic coupling is formed for reversible coupling a transfer device to a corresponding drive element.

Document JPH09328217 discloses a roller conveying device according to the preamble of claim 1

The object of the present invention is to provide a roller conveying device, a connection machine, a plant and an extension method, which are at least partially free from the drawbacks described above and, at the same time, simple and inexpensive to manufacture.

### SUMMARY

The invention provides in a first aspect a roller conveying device according to claim 1, in a second aspect a connection machine according to claim 10, in a third aspect a plant for the production of articles according to claim 14 and in a fourth aspect a method to extend a roller conveying device according to claim 15. Preferred embodiments of the invention become apparent from the dependent claims.

### BRIEF DESCRIPTION OF THE DRAWINGS

The present invention will now be described with reference to the appended drawings, which illustrate some non-limiting embodiments thereof, wherein:
- Figure 1 is a perspective, schematic view of a roller conveying device according to the present invention, which is in a basic configuration;
- Figure 2 is a perspective, schematic view of the roller conveying device of Figure 1 in an extended configuration;
- Figure 3 is a sectional side view of the roller conveying device of Figure 1;
- Figure 4 is a sectional side view of the roller conveying device of Figure 2;
- Figure 5 is a side view of a ceramic industry plant in which a connection machine is present in an open configuration while processing large products;
- Figure 6 is a side view of the set of ceramic industry machines, wherein the connection machine of Figure 5 is in the open configuration while processing small products; and
- Figure 7 is a side view of the set of ceramic industry machines of Figure 6, wherein the connection machine of Figures 5 and 6 is in the closed configuration.

### DETAILED DESCRIPTION

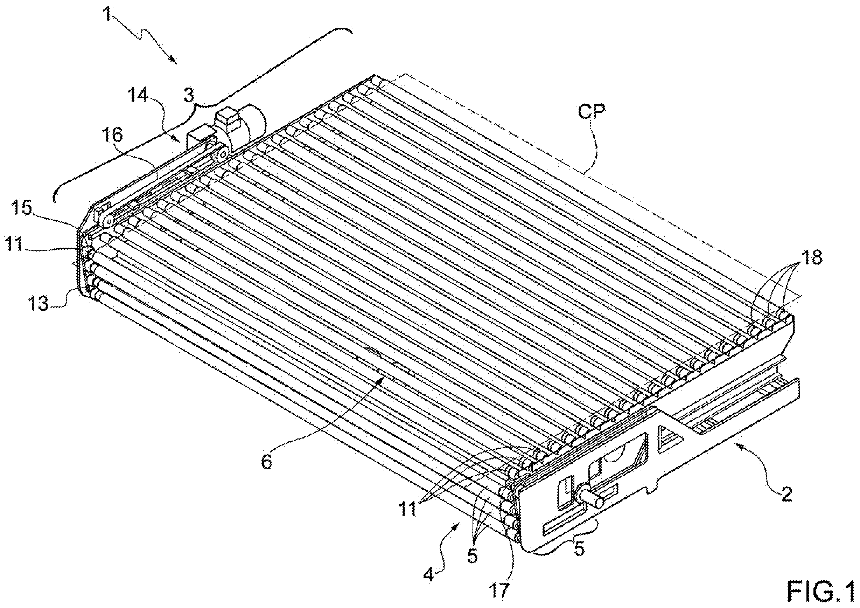

In Figure 1, the numeral 1 indicates, as a whole, an extensible roller conveying device in accordance with the first aspect of the present invention. The conveying device 1 is configured to convey articles AR along a path with a variable length L.

According to some non-limiting embodiments, the articles AR are ceramic industry articles, in particular tiles, more particularly unfired tiles.

The roller conveying device 1 comprises a roller conveyor 2, which is provided with a plurality of rollers 3. The roller conveyor 2 is configured to convey articles (for example unfired tiles) along (at least) one segment of the conveying path P. The roller conveying device 1 comprises an extension device 4 provided with rollers 5 and an actuator system 6, which is configured to move, in particular in a combined manner, the rollers 5. In this way, the length of the conveying device 1 can be varied by changing, downstream or upstream of the roller conveyor 2, the number of rollers 5 along the conveying path P.

According to some non-limiting embodiments (such as those illustrated in the attached figures), the roller conveying device 1 is a conveying device for conveying ceramic industry articles, in particular tiles, more particularly unfired tiles.

The actuator system 6 is configured to move (at least) part of the rollers 5. Advantageously, the actuator system 6 is configured to move (all) the rollers 5 (simultaneously).

The words "in a combined manner" are intended to mean that, when one of the rollers 5 moves, the other rollers 5 also move accordingly. In other words, if one of the rollers 5 is moved by the first actuator system 6, the other rollers 5 will also be moved.

In some non-limiting cases, the motion of the rollers is mechanically constrained, consequently the rollers 5 are moved simultaneously by the actuator system 6.

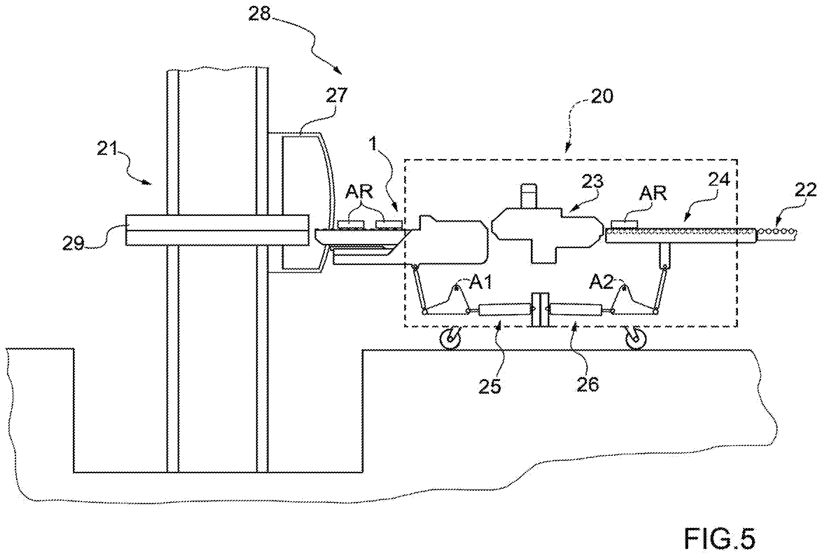

The roller conveying device 1 (particularly the extension device 4) comprises an actuator system 7 to also move the roller conveyor 2 in a direction D substantially parallel to the conveying path P. This allows the roller conveyor 2 to be moved closer to (or further away from) a manufacturing machine which can be located upstream of the roller conveying device. In some non-limiting cases, as shown in Figures 5-7, the actuator system 7 allows the roller conveyor 2 to be moved closer to or further away from a ceramic press. Accordingly, the actuator system 7 allows the distance of the roller conveyor 2 from the ceramic press to be adapted, so as to adapt it to the change of format produced by the ceramic press.

According to the invention, the actuator system 7 is an independent actuator system (separate from the actuator system 6) configured to move the roller conveyor 2 in a direction D substantially parallel to the conveying path P. In particular, in such cases, the actuator system 6 and the actuator system 7 are operated in a coordinated manner so that a movement of the roller conveyor 2 corresponds to a transfer of an equivalent number of rollers 5 along the path P.

According to some non-limiting embodiments, not shown, the (independent) actuator system 7 comprises an electric motor configured to move the roller conveyor 2 along guides 9 (of the device 4). In particular, the guides 9 are two guides arranged parallel to the conveying path P. More particularly, the electric motor of the (independent) actuator system 7 is a rotary motor which allows the roller conveyor to be moved along the guides 9 by means of a ball screw.

According to a further embodiment, not shown, the (independent) actuator system 7 comprises (at least) one electric motor, which is configured to move the roller conveyor along guides and/or is also configured to perform the function of the guides.

In accordance with further variants that are not a part of the present invention, the actuator system 7 comprises (in particular, is - coincides with) the actuator system 6. In these cases, in particular, the actuator system 7 (i.e. the actuator system 6) comprises a connection element (for example a pin, a hook, or other elements which perform the same function - known per se and not illustrated) to be connected to the roller conveyor 2.

The connection element allows the actuator system 6 to move the roller conveyor 2 along the guides 9 (in particular, linear guides), which are part of the device 4.

The actuator system 6 is configured to move the rollers 5 to the conveying path P (and to the work position - defined below), along respective transfer paths having at least one common segment.

The rollers 3 define a conveying plane CP, along the conveying path P, and the actuator system 6 moves the rollers 5 from a rest position, outside of the conveying plane, to a work position, substantially arranged in the conveying plane.

Advantageously, but not necessarily, the actuator system 6 comprises an electric motor 10 which is mechanically connected to the rollers 5 of the extension device 4.

In particular, the rollers 5 each have a respective shaft 11. More particularly, the shafts 11 of the rollers 5 comprise ends 12 which axially protrude from the rollers 5. These ends 12 serve the function of mechanically coupling the rollers 5 to the actuator system 6, which allows the movement thereof (in particular, along the respective transfer path).

Advantageously, but not necessarily, the actuator system 6 comprises at least one elongated transmission element provided with seats where the shafts 11 of the rollers 5 are inserted, in particular inside each of which an end 12 of a shaft 11 is inserted. More precisely, the actuator system 6 comprises two elongated transmission elements provided with seats where the shafts 11 of the rollers 5 are inserted, in particular inside each of which an end 12 of a shaft 11 is inserted.

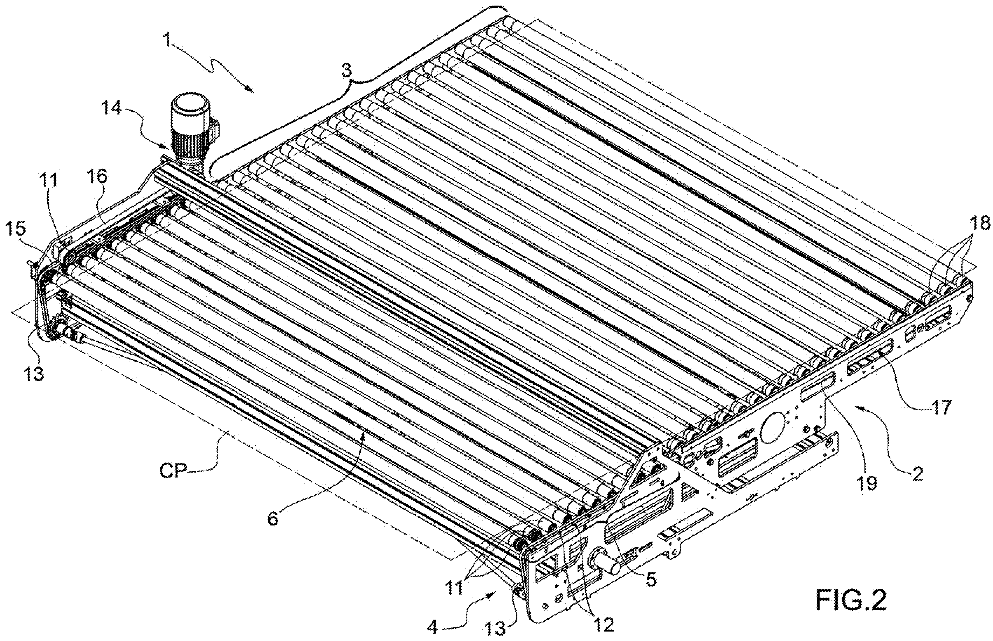

According to some non-limiting embodiments (such as that illustrated in Figures 1-4), the elongated transmission elements are chains 13 provided with (as the seats) hollow pins 14, inside each of which an end 12 of a shaft 11 is inserted. In other words, the rollers 5 are connected (pivoted) to the chains 13, i.e. the chains 13 support the rollers 5. Accordingly, the chains 13 are configured to (at least partially) support the rollers 5.

According to some embodiments that are not a part of the present invention, the aforementioned connection element couples (at least) one roller 3 of the roller conveyor 2 to the elongated transmission elements, in particular to the chains 13.

Advantageously, but not necessarily, (at least) the roller 3 closest to the rollers 5 is connected (pivoted) to the elongated transmission element (in particular, to the elongated transmission elements; more particularly, to the chains 13). More precisely, the (each) elongated transmission element is provided with seats, inside (at least) one of which the shaft 11 of (at least) one of the rollers 3 is inserted, in particular the one closest to the second rollers 5.

Alternatively or additionally, the elongated transmission element (in particular, the elongated transmission elements; more particularly, the chains 13) is connected directly to the roller conveyor 2. In this way, the roller conveyor 2 (together with all the rollers 3) is moved by the elongated transmission element (i.e. from the chains 13).

Accordingly, when the chains 13 move (through the motor 10), (at least) the roller 3 closest to the rollers 5 pushes (or pulls) the roller conveyor 2 along the guides 9. In other words, through the connection element, the movement of the rollers 3 is mechanically constrained to the movement of the chains 13, and therefore of the rollers 5 and the actuator system 6. In this way, as the rollers 5 and (at least) the roller 3 closest to the rollers 5 are mounted (pivoted) on the same chains 13, the distance travelled by the roller conveyor 2 (pushed (at least) by the roller 3 closest to the rollers 5) along the direction D parallel to the conveying path corresponds exactly to the (linear) distance travelled by the rollers 5 to extend the conveying device 1.

According to some non-limiting embodiments, the chains 13 can be replaced by any element capable of transmitting the motion of the actuator system 6 to the rollers 5 (such as for example a belt - which can be toothed or not, a conveyor band, a sleeve, etc.).

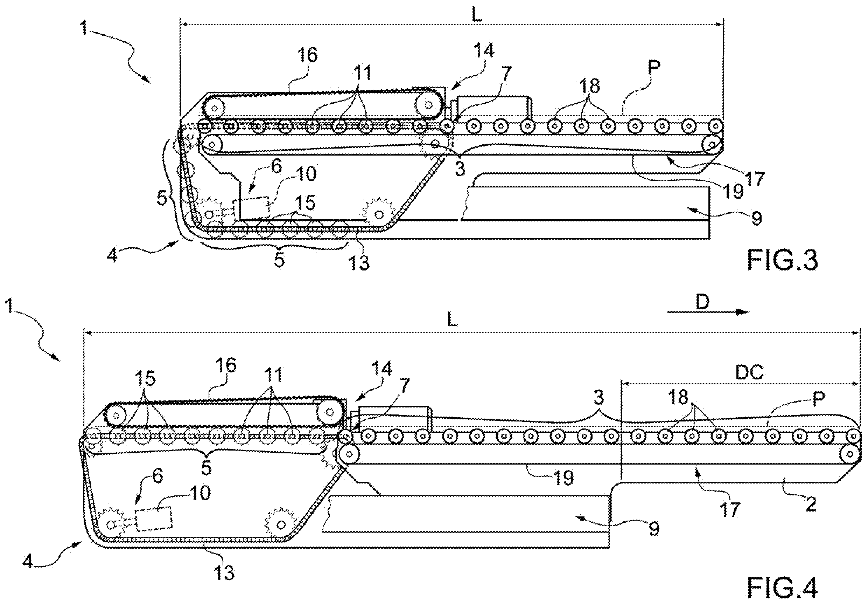

The roller conveying device 1 comprises an actuator system 14 configured to make the rollers 5 arranged along the conveying path P rotate on themselves. In particular, the expression "make the rollers 5 arranged along the conveying path P rotate on themselves" means (as shown in Figure 4) that the actuator system 14 is configured to make at least part of the rollers 5 arranged along the conveying path P rotate on themselves (each one around its own longitudinal axis). In other words, the conveying device 1 comprises an actuator system 14 which rotates the rollers 5 arranged along the conveying path P.

In this way, by reducing the distance between two consecutive driven rollers, it is possible to reduce the size of the minimum format that the conveying device 1 is able to carry. Furthermore, the conveying device 1 is decidedly simpler (constructively and operationally less costly) compared to the state of the art and also allows the articles AR to be handled in a more delicate way (the articles AR do not undergo tugs).

Advantageously, but not necessarily, the actuator system 14 is configured to make (at least) most of the rollers 5 arranged along the conveying path P rotate on themselves.

In some non-limiting cases, the actuator system 14 is configured to make all the rollers 5 arranged along the conveying path P rotate on themselves.

According to some non-limiting embodiments, not shown, the actuator system 14 is configured to make all the rollers 5 arranged along the conveying path P rotate on themselves, except for the roller 5 (or the rollers 5) arranged along the conveying path P and furthest away from the roller conveyor 2.

In some non-limiting cases, this roller 5 (or these rollers 5) not moved by the actuator system 14 is (are) idle.

In other non-limiting cases, this roller 5 (or these rollers 5) not moved by the actuator system 14 is (are) moved indirectly by the actuator system 14, in particular by means of a (flat or toothed) belt. In these cases too, therefore, the actuator system 14 is configured to make all the rollers 5 arranged along the conveying path P rotate on themselves.

Advantageously, but not necessarily, the rollers 5 of the extension device 4 each have, at least at one end (in particular at the ends 12 of the shaft 11), a number of bushings 15 (in particular, toothed bushings).

Advantageously, but not necessarily, the actuator system 14 comprises an elongated transmission element, which is configured to transmit, through coupling to the bushings 15, a rotary motion to the rollers 5 arranged along the conveying path P.

In particular, the elongated transmission element (of the system 14) comprises (is) a locular motorized element, which transmits, through mechanical coupling to the toothed bushings 15, a rotary movement to the rollers 5 arranged along the conveying path P.

According to the non-limiting embodiments illustrated in Figures 3 and 4, the locular element is a motorized toothed belt 16. In particular, the motorized toothed belt 16 is connected to the toothed bushings 15 of the rollers 5 located on the conveying path P through a shape coupling. In other words, the teeth of the motorized toothed belt 16 (in particular, arranged with the long side substantially parallel to the conveying path P) transmit a rotary motion to the rollers 5 arranged along the conveying path P.

The extension device 4 comprises a plurality of rollers 5, a first part of which is arranged along the conveying path P and a second part is arranged outside the conveying path P. In these cases, the intermediate length of the path P will be less than that shown in Figure 4 and greater than that shown in Figure 3.

According to some non-limiting embodiments (such as that illustrated in Figures 3 and 4), the motorized toothed belt 16 transmits the rotary motion exclusively to the rollers 5 of the extension device which are located along the conveying path P. This is because, since the long side of the motorized toothed belt 16 is substantially parallel to the conveying path P, the actuator system 6 moves (at least some of) the rollers 5 from the work position (along the conveying path P), in contact with the motorized toothed belt 16, to the rest position (outside the conveying path P), not in contact with the motorized toothed belt 16. Consequently, the rollers 5 in the rest position, as they are not in contact with the toothed belt 16, do not rotate on themselves, whereas the rollers 5 in the work position, as they are in contact with the toothed belt 16, rotate on themselves.

According to some non-limiting embodiments (such as that illustrated in Figures 1-4), the first actuator system 6 moves the rollers 5 by means of a "shutter" operation. In other words, the chain 13 supporting the rollers 5 and moved by the actuator system 6 has a first portion parallel and adjacent to the conveying path P and a second portion, adjacent to the first portion, which moves away from the conveying path P.

Advantageously, but not necessarily, the roller conveying device 1 comprises an actuator system 17 configured to make the rollers 3 of the roller conveyor 2 rotate on themselves.

In particular, the rollers 3, similarly to the rollers 5, each have a respective shaft 11, which is equipped with at least one end 12 of a bushing 18 (in particular, a smooth bushing). More particularly, the actuator system 17 comprises a motorized belt 19 which transmits a rotary motion through coupling (friction) with the (smooth) bushing 18 of each roller 3 of the roller conveyor 2.

As an alternative to the smooth bushings 18 moved by friction by the belt 19, it is possible to use any element capable of transmitting a rotary motion to the rollers, which can be either a common element (e.g., a toothed belt, a chain, etc.), or an independent element (e.g., electric motors for each individual roller or for restricted groups of rollers).

Advantageously, but not necessarily, the pitch between the rollers 3 and/or 5 arranged along the conveying path P is substantially constant, in particular it is fixed. In the ceramic industry for the production of articles AR (tiles), the fact that the rollers are at a substantially constant distance from one another allows the articles AR (pressed, but still unfired tiles) to be conveyed, reducing the risk of causing cracks and/or fractures due to an excessive distance between the rollers 3, 5. The constant pitch between the rollers allows the weight of the articles AR to be evenly distributed on the rollers, favouring the conveying thereof without shocks.

In accordance with the second aspect of the present invention, there is provided a connection machine connecting a loading unit to a discharge unit according to claim 10.

According to some non-limiting embodiments (such as that illustrated in Figures 5-7), the connection machine 20 is arranged between a ceramic press 21 (a loading unit) and a conveyor line 22 (a discharge unit). In particular, the machine 20 comprises a roller conveying device 1.

According to some non-limiting embodiments (such as those illustrated in Figures 5-7), the connection machine 20 is a machine for connecting a press 21, provided with moulds 29, for the production of ceramic industry articles AR, to a conveyor line for such articles AR, in particular for tiles, more particularly unfired tiles.

Advantageously, but not necessarily, the machine 20 comprises a rotation unit 23 (a treatment unit) for the rotation of the articles AR (pressed, unfired tiles) to be conveyed from the outlet of the ceramic press 21. In particular, the machine 20 also comprises a discharge roller conveyor 24 (provided with rollers) configured for sorting out the rotated articles AR. According to some non-limiting embodiments, not shown, the roller conveyor 24 is defined as the conveying device 1 described in accordance with the first aspect of the present invention.

According to some non-limiting embodiments (such as that illustrated in Figures 5-6), the articles AR (tiles), whatever the format, come out of the ceramic press 21 (by means of a pusher, not shown), are conveyed by the roller conveying device 1 inside the rotation unit 23. The rotation unit 23 makes the article AR (or each article AR) located therein rotate on itself (tip over). Once the article AR has been rotated, the rotation unit 23 conveys the article AR onto the discharge roller conveyor 24, which in turn conveys it to the conveyor line 22.

Advantageously, but not necessarily, the rollers of the discharge roller conveyor 24 and the rollers 3, 5 of the roller conveying device 1 move at adjustable angular speeds. In particular, the rollers of the discharge roller conveyor 24 move with lower angular speeds compared to those of the rollers 3, 5 of the roller conveying device 1. In this way, it is possible to use the discharge roller conveyor 24 as a temporary magazine (buffer) for the smaller formats.

According to some non-limiting embodiments, the rollers of the discharge roller conveyor 24 have different angular speeds, in particular decreasing speeds. In this way, the rollers of the discharge roller conveyor 24 allow a progressive slowing down of the articles AR present on the discharge roller conveyor 24, thereby improving its capacity as a temporary magazine (buffer) for the smaller formats.

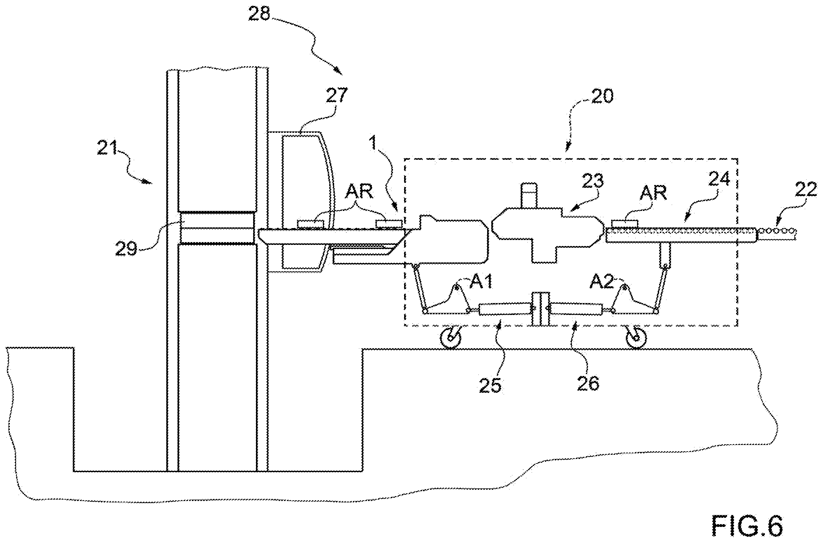

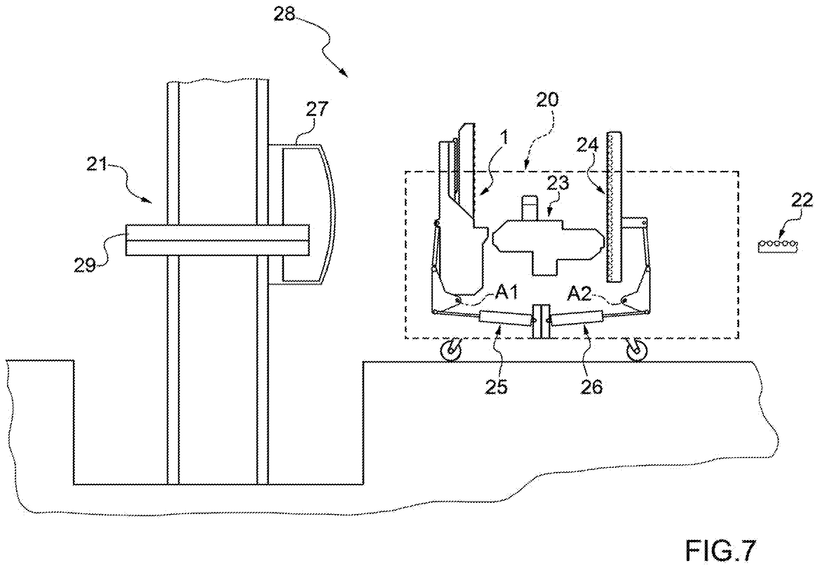

Advantageously, but not necessarily, in order to easily allow maintenance and format changes (which require space in front of the ceramic press 21), the connection machine 1 comprises a disengagement system 25 configured to move the roller conveying device 1 from an engagement position (shown in Figures 5 and 6) to a disengagement position (shown in Figure 7).

In particular, the engagement position is substantially horizontal and the disengagement position is substantially vertical.

In particular, the first disengagement system 25 is configured to move the roller conveying device 1 by means of a rotation around an axis A1 transverse to the conveying path A1. More particularly, the rotation around the axis A1 takes place through articulated connections (such as those shown in Figures 5-7) between the disengagement system 25 and the conveying device 1.

The overall size reduction described above is implemented with particular ease by reducing the length of the roller conveying device 1 (i.e. by moving the roller conveyor 2 via the actuator system 7 away from the ceramic press 21). In this way, the roller conveying device 1 is freed from the hindrances 27 which are generally caused by the ceramic press and the protections (partitions, screens, etc.) necessary to safeguard the operators, thus allowing the rotation of the roller conveying device 1.

Advantageously, but not necessarily, in order to easily allow maintenance and machine movements, the connection machine 1 comprises a disengagement system 26 configured to move the discharge roller conveyor 24 from an engagement position (shown in Figures 5 and 6) to a disengagement position (shown in Figure 7). In particular, the engagement position is substantially horizontal and the disengagement position is substantially vertical.

In particular, the disengagement system 26 is configured to move the discharge roller conveyor 24 by means of a rotation around an axis A2 transverse to the conveying path P. More particularly, the rotation around the axis A2 takes place through articulated connections (such as those shown in Figures 5-7) between the disengagement system 26 and the discharge roller conveyor 24.

In accordance with the third aspect of the present invention, there is provided a plant 28 for the production of articles AR according to claim 14, comprising a roller conveying device 1 as described above in accordance with the first aspect of the present invention. In particular, the plant 28 comprises a connection machine 20 in accordance with the second aspect of the present invention.

According to some non-limiting embodiments (such as those illustrated in Figures 5-7), the plant 28 is a plant for the production of ceramic industry articles AR, in particular for the production of tiles, more particularly unfired tiles.

In accordance with the fourth aspect of the present invention, there is provided a method to extend a roller conveying device according to claim 15.

Advantageously, but not necessarily, the method comprises a movement step, during which the actuator system 7 moves the roller conveyor 2 by a certain distance DC in the direction D substantially parallel to the conveying path.

The method comprises an extension step, during which the actuator system 6 moves the rollers 5 so as to vary the length L of the conveying path P (and of the conveying device 1) by changing, downstream or upstream of the roller conveyor 2, the number of rollers 5 along the conveying path P.

According to some non-limiting embodiments (as shown in Figures 1-4), during the extension step, the actuator system 6 also moves the rollers 3 (through the aforementioned connection element).

According to further non-limiting embodiments, not shown, the method comprises a movement step, during which the (independent) actuator system 7 moves the roller conveyor 2 by a certain distance DC in the direction D substantially parallel to the conveying path. Advantageously, but not necessarily, during the extension step, the actuator system 6 moves the rollers 5 by a distance substantially equal to the distance DC.

In these cases, advantageously, but not necessarily, particularly during a format change (replacement of the mould with a different size mould), the extension step and the movement step take place substantially simultaneously. This allows time saving.

According to some embodiments, not shown, the roller conveyor 2 is downstream of the extension device 4; accordingly, the number of rollers 5 is modified downstream of the roller conveyor 2.

According to some non-limiting embodiments (such as that illustrated in Figures 3 and 4), the direction D is opposite to the discharge roller conveyor 26. In other words, the roller conveyor 2 is moved in direction D opposite to the flow of the articles AR (which goes from the ceramic press 21 to the conveyor line 22).

According to some non-limiting embodiments, the method comprises a step, prior to the extension step, wherein the distance DC by which the actuator system 6 must move the extension device 4 (in particular, the rollers 5; additionally or alternatively, the rollers 3; more precisely, the elongated transmission element) is set, particularly by means of a software.

According to further non-limiting embodiments, the method comprises a step, prior to the extension and movement steps, wherein the distance DC, by which the actuator system 6 and the actuator system 7, respectively, independently move the extension device 4 (in particular, the rollers 5; more precisely, the elongated transmission element) and the roller conveyor 2, is set, particularly by means of a software.

According to some non-limiting embodiments, the distance DC is set directly, i.e. by selecting the distance DC via a human-machine interface (HMI).

According to other non-limiting embodiments, the distance DC is set indirectly, i.e. by selecting the number of rollers 5 to be added to the conveying path P downstream of the roller conveyor 2, or by selecting the format change. In the latter case, the roller conveying device 1 automatically processes (via a control unit) the optimal number of rollers to be added/removed to/from the conveying path P.

According to some non-limiting embodiments (such as those illustrated in the attached figures), when there is a change in the number of rollers 5 added to the conveying path P by the extension device 4, there is a corresponding suitable movement of the roller conveyor 2 along the guides 9, which is generated by the actuator system 7.

The present invention has several advantages. First of all, it allows the flexibility of a conveying device to be increased, adapting it to the manufacturing machine preceding it and freeing it from the use of manually removable rollers, which are complex to install and costly, especially in terms of time. Furthermore, the lengthening or shortening of the conveying device takes place automatically, thus significantly reducing time in the case of maintenance or format change (a replacement of the mould in the case of a ceramic press located upstream of the conveying device). Finally, the fact that the roller conveying device is also retractable allows the conveying device itself to be freed from the hindrances of a ceramic press, and therefore allows the conveying device to be rotated in order to free up space for ordinary and extraordinary maintenance operations or for the replacement of a mould, thereby avoiding the use of mechanically complex and expensive solutions such as the one described in Italian patent no. 1342160.

## Claims

1. A roller conveying device (1) to convey articles along a conveying path (P) with a variable length (L); the conveying device comprising:
a roller conveyor (2), which is provided with a plurality of first rollers (3) and is configured to convey the articles along at least one segment of the conveying path (P);
an extension device (4) provided with second rollers (5);
at least a first actuator system (6) to move at least part of the second rollers (5) so as to vary the length (L) of the conveying path (P) and of the roller conveying device (1) by changing, downstream or upstream of the roller conveyor (2), the number of second rollers (5) along the conveying path (P);
a second actuator system (14) configured to make the second rollers (5) arranged along the conveying path (P) rotate on themselves; wherein the first rollers (3) define a conveying plane (CP);
the first actuator system (6) being configured to move at least part of the second rollers (5) between a rest position on the outside of the conveying plane (CP) and a work position substantially arranged on the conveying plane (CP); wherein the first actuator system (6) is configured to move the second rollers (5) to the conveying path (P) and to the work position along respective transfer paths having at least one common segment;
a third actuator system (7), which is configured to move the roller conveyor (2) in a direction (D) that is substantially parallel to the conveying path (P);
**characterized in that** the third actuator system (7) is an independent actuator system, separated from the first actuator system (6).

2. The roller conveying device (1) according to the preceding claim, wherein the first actuator system (6) comprises an electric motor (10), which is mechanically connected to the second rollers (5) of the extension device (4).

3. The roller conveying device (1) according to any one of the preceding claims, wherein the second rollers (5) each have a respective shaft (11); the first actuator system (6) comprises at least one elongated transmission element provided with seats where the shafts (11) of the second rollers (5) are inserted; the elongated transmission element being configured to at least partially support the second rollers (5).

4. The roller conveying device (1) according to any one of the preceding claims, wherein the first rollers (3) each have a respective shaft (11); the first actuator system (6) comprises at least one elongated transmission element; the elongated transmission element being configured to at least partially support (at least) the first roller (3) closest to the second rollers (5).

5. The roller conveying device (1) according to any one of the preceding claims, wherein the second actuator system (14) is configured to make at least most of the second rollers (5) arranged along the conveying path (P) rotate on themselves.

6. The roller conveying device (1) according to any one of the preceding claims, wherein the second actuator system (14) is configured to make all the second rollers (5) arranged along the conveying path (P) rotate on themselves.

7. The roller conveying device (1) according to any one of the preceding claims, wherein the second rollers (5) each have a respective shaft (11), which is provided, at least at one end (12), with a toothed bushing (15); in particular, the second actuator system (14) comprises a locular motorized element, which transmits, through mechanical coupling between the locular element and the toothed bushings (16), a rotary movement to the second rollers (5) arranged along the conveying path (P).

8. The roller conveying device (1) according to any one of the preceding claims and comprising a fourth actuator system (17), which is configured to make the first rollers (3) rotate on themselves; in particular, the first rollers (3) each have a respective shaft (11), which is provided, at least at one end (12), with a smooth bushing (18); in particular, the fourth actuator system (17) comprises a motorized belt (19), which transmits a rotary movement through friction between the belt (19) and the smooth bushing (18) of each first roller (3) of the roller conveyor (2).

9. The roller conveying device (1) according to any one of the preceding claims, wherein the pitch between the first rollers (3) and between the second rollers (5) arranged along the conveying path (P) is substantially constant.

10. A connection machine (20) connecting a loading unit to a discharge unit and comprising a roller conveying device (1) according to any one of the preceding claims.

11. The connection machine (20) according to claim 10 and comprising a treatment unit to treat the articles to be conveyed and, in particular, a discharge roller conveyor (24) for sorting out the treated articles.

12. The connection machine (20) according to claims 10 or 11 and comprising a first disengagement system (25), which is configured to move the roller conveying device (1) from an engagement position to a disengagement position; in particular, the engagement position is substantially horizontal and the disengagement position is substantially vertical; in particular, the first disengagement system (25) is configured to move the roller conveying device (1) by means of a rotation around an axis (A1), which is transverse to the conveying path (P).

13. The connection machine (20) according to claim 12 and comprising a second disengagement system (26), which is configured to move the discharge roller conveyor (24) from an engagement position to a disengagement position; in particular, the engagement position is substantially horizontal and the disengagement position is substantially vertical; in particular, the second disengagement system (26) is configured to move the discharge roller conveyor (24) by means of a rotation around an axis (A2), which is transverse to the conveying path (P).

14. A plant for the production of articles, comprising a roller conveying device (1) according to any one of the claims from 1 to 9; in particular, the plant comprises a connection machine (20) according to any one of the claims from10 to 13.

15. A method to extend a roller conveying device (1) according to any of claims 1-9; wherein
the roller conveyor (2) is arranged in the area of a first processing unit;
wherein the extension device (4) is arranged in the area of a second processing unit ; wherein
the method comprises:
an extension step, during which the first actuator system (6) moves the second rollers (5) so as to vary the length (L) of the conveying path (P) and of the roller conveying device (1) by changing, downstream or upstream of the roller conveyor (2), the number of second rollers (5) along the conveying path (P),

## Patentansprüche

1. Rollenfördervorrichtung (1) zum Fördern von Artikeln entlang eines Förderweges (P) mit einer variablen Länge (L); wobei die Fördervorrichtung umfasst:
einen Rollenförderer (2), der mit einer Vielzahl von ersten Rollen (3) versehen ist und dazu konfiguriert ist, die Artikel entlang mindestens eines Segments des Förderweges (P) zu fördern;
eine Verlängerungsvorrichtung (4), die mit zweiten Rollen (5) versehen ist;
mindestens ein erstes Aktorsystem (6), um mindestens einen Teil der zweiten Rollen (5) zu bewegen, um die Länge (L) des Förderweges (P) und der Rollenfördervorrichtung (1) zu variieren, indem, stromabwärts oder stromaufwärts des Rollenförderers (2), die Anzahl der zweiten Rollen (5) entlang des Förderweges (P) verändert wird;
ein zweites Aktorsystem (14), das so konfiguriert ist, dass es die zweiten Rollen (5), die entlang des Förderweges (P) angeordnet sind, um sich selbst drehen lässt; wobei die ersten Rollen (3) eine Förderebene (CP) definieren;
wobei das erste Aktorsystem (6) konfiguriert ist, um mindestens einen Teil der zweiten Rollen (5) zwischen einer Ruheposition auf der Außenseite der Förderebene (CP) und einer Arbeitsposition, die im Wesentlichen auf der Förderebene (CP) angeordnet ist, zu bewegen; wobei das erste Aktorsystem (6) konfiguriert ist, um die zweiten Rollen (5) entlang jeweiliger Transferwege, die mindestens ein gemeinsames Segment aufweisen, zu dem Förderweg (P) und zu der Arbeitsposition zu bewegen;
ein drittes Aktorsystem (7), das dazu konfiguriert ist, den Rollenförderer (2) in einer Richtung (D) zu bewegen, die im Wesentlichen parallel zum Förderweg (P) ist;
**dadurch gekennzeichnet, dass** das dritte Aktorsystem (7) ein unabhängiges Aktorsystem ist, das von dem ersten Aktorsystem (6) getrennt ist.

2. Rollenfördervorrichtung (1) nach dem vorhergehenden Anspruch, wobei das erste Aktorsystem (6) einen Elektromotor (10) umfasst, der mechanisch mit den zweiten Rollen (5) der Verlängerungsvorrichtung (4) verbunden ist.

3. Rollenfördervorrichtung (1) nach einem der vorhergehenden Ansprüche, wobei die zweiten Rollen (5) jeweils eine jeweilige Welle (11) aufweisen; das erste Aktorsystem (6) umfasst mindestens ein längliches Übertragungselement, das mit Sitzen versehen ist, wo die Wellen (11) der zweiten Rollen (5) eingesetzt sind; wobei das längliche Übertragungselement konfiguriert ist, um die zweiten Rollen (5) mindestens teilweise zu tragen.

4. Rollenfördervorrichtung (1) nach einem der vorhergehenden Ansprüche, wobei die ersten Rollen (3) jeweils eine jeweilige Welle (11) aufweisen; das erste Aktorsystem (6) umfasst mindestens ein längliches Übertragungselement; wobei das längliche Übertragungselement konfiguriert ist, um (mindestens) die erste Rolle (3), die den zweiten Rollen (5) am nächsten liegt, mindestens teilweise zu tragen.

5. Rollenfördervorrichtung (1) nach einem der vorhergehenden Ansprüche, wobei das zweite Aktorsystem (14) so konfiguriert ist, dass es zumindest die meisten der zweiten Rollen (5), die entlang des Förderweges (P) angeordnet sind, um sich selbst drehen lässt.

6. Rollenfördervorrichtung (1) nach einem der vorhergehenden Ansprüche, wobei das zweite Aktorsystem (14) so konfiguriert ist, dass es alle zweiten Rollen (5), die entlang des Förderweges (P) angeordnet sind, um sich selbst drehen lässt.

7. Rollenfördervorrichtung (1) nach einem der vorhergehenden Ansprüche, wobei die zweiten Rollen (5) jeweils eine jeweilige Welle (11) aufweisen, die zumindest an einem Ende (12) mit einer Zahnbuchse (15) versehen ist; insbesondere umfasst das zweite Aktorsystem (14) ein ortsfestes motorisches Element, das durch mechanische Kopplung zwischen dem ortsfesten Element und den Zahnbuchsen (16) eine Drehbewegung auf die entlang des Förderweges (P) angeordneten zweiten Rollen (5) überträgt.

8. Rollenfördervorrichtung (1) nach einem der vorhergehenden Ansprüche und umfassend ein viertes Aktorsystem (17), das so konfiguriert ist, dass es die ersten Rollen (3) um sich selbst drehen lässt; insbesondere weisen die ersten Rollen (3) jeweils eine jeweilige Welle (11) auf, die zumindest an einem Ende (12) mit einer glatten Buchse (18) versehen ist; insbesondere umfasst das vierte Aktorsystem (17) einen motorisierten Riemen (19), der eine Drehbewegung durch Reibung zwischen dem Riemen (19) und der glatten Buchse (18) jeder ersten Rolle (3) des Rollenförderers (2) überträgt.

9. Rollenfördervorrichtung (1) nach einem der vorhergehenden Ansprüche, wobei die Steigung zwischen den ersten Rollen (3) und zwischen den zweiten Rollen (5), die entlang des Förderweges (P) angeordnet sind, im Wesentlichen konstant ist.

10. Verbindungsmaschine (20), die eine Ladeeinheit mit einer Entladeeinheit verbindet und eine Rollenfördervorrichtung (1) nach einem der vorhergehenden Ansprüche umfasst.

11. Verbindungsmaschine (20) nach Anspruch 10 und umfassend eine Behandlungseinheit zum Behandeln der zu fördernden Artikel und insbesondere einen Entladerollenförderer (24) zum Aussortieren der behandelten Artikel.

12. Verbindungsmaschine (20) nach Anspruch 10 oder 11 und umfassend ein erstes Ausrücksystem (25), das dazu konfiguriert ist, die Rollenfördervorrichtung (1) aus einer Eingriffsposition in eine Ausrückposition zu bewegen; insbesondere ist die Eingriffsposition im Wesentlichen horizontal und die Ausrückposition ist im Wesentlichen vertikal; insbesondere ist das erste Ausrücksystem (25) dazu konfiguriert, die Rollenfördervorrichtung (1) mittels einer Drehung um eine Achse (A1), die quer zu dem Förderweg (P) verläuft, zu bewegen.

13. Verbindungsmaschine (20) nach Anspruch 12 und umfassend ein zweites Ausrücksystem (26), das dazu konfiguriert ist, den Entladerollenförderer (24) aus einer Eingriffsposition in eine Ausrückposition zu bewegen; insbesondere ist die Eingriffsposition im Wesentlichen horizontal und die Ausrückposition ist im Wesentlichen vertikal; insbesondere ist das zweite Ausrücksystem (26) dazu konfiguriert, den Entladerollenförderer (24) mittels einer Drehung um eine Achse (A2), die quer zu dem Förderweg (P) verläuft, zu bewegen.

14. Anlage zur Herstellung von Artikeln, umfassend eine Rollenfördervorrichtung (1) nach einem der Ansprüche 1 bis 9;
insbesondere umfasst die Anlage eine Verbindungsmaschine (20) nach einem der Ansprüche 10 bis 13.

15. Verfahren zum Verlängern einer Rollenfördervorrichtung (1) nach einem der Ansprüche 1-9; wobei
der Rollenförderer (2) im Bereich einer ersten Verarbeitungseinheit angeordnet ist; wobei
die Verlängerungsvorrichtung (4) im Bereich einer zweiten Verarbeitungseinheit angeordnet ist; wobei
wobei das Verfahren Folgendes umfasst:
einen Verlängerungsschritt, bei dem das erste Aktorsystem (6) die zweiten Rollen (5) bewegt, um die Länge (L) des Förderweges (P) und der Rollenfördervorrichtung (1) zu variieren, indem, stromabwärts oder stromaufwärts des Rollenförderers (2),
die Anzahl der zweiten Rollen (5) entlang des Förderweges (P) verändert wird.

## Revendications

1. Dispositif de transport à rouleaux (1) pour transporter des articles le long d'un trajet de transport (P) d'une longueur variable (L) ; le dispositif de transport comprenant :
un convoyeur à rouleaux (2), équipé d'une pluralité de premiers rouleaux (3) et configuré pour transporter les articles le long d'au moins un segment du trajet de transport (P) ;
un dispositif d'extension (4) muni de seconds rouleaux (5) ;
au moins un premier système d'actionnement (6) pour déplacer au moins une partie des seconds rouleaux (5) de manière à faire varier la longueur (L) du trajet de transport (P) et du dispositif de transport à rouleaux (1) en modifiant, en aval ou en amont du convoyeur à rouleaux (2), le nombre de seconds rouleaux (5) le long du trajet de transport (P) ;
un deuxième système d'actionnement (14) configuré pour faire tourner sur eux-mêmes les seconds rouleaux (5) disposés le long du trajet de transport (P) ; dans lequel les premiers rouleaux (3) définissent un plan de transport (CP) ;
le premier système d'actionnement (6) étant configuré pour déplacer au moins une partie des seconds rouleaux (5) entre une position de repos à l'extérieur du plan de transport (CP) et une position de travail sensiblement disposée sur le plan de transport (CP) ; dans lequel le premier système d'actionnement (6) est configuré pour déplacer les seconds rouleaux (5) vers le trajet de transport (P) et vers la position de travail le long de trajets de transfert respectifs ayant au moins un segment commun ;
un troisième système d'actionnement (7), configuré pour déplacer le convoyeur à rouleaux (2) dans une direction (D) sensiblement parallèle au trajet de transport (P) ;
**caractérisé en ce que** le troisième système d'actionnement (7) est un système d'actionnement indépendant, séparé du premier système d'actionnement (6).

2. Dispositif de transport à rouleaux (1) selon la revendication précédente, dans lequel le premier système d'actionnement (6) comprend un moteur électrique (10), qui est mécaniquement relié aux seconds rouleaux (5) du dispositif d'extension (4).

3. Dispositif de transport à rouleaux (1) selon l'une quelconque des revendications précédentes, dans lequel les seconds rouleaux (5) ont chacun un arbre (11) respectif ; le premier système d'actionnement (6) comprend au moins un élément de transmission allongé pourvu de logements où sont insérés les arbres (11) des seconds rouleaux (5) ; l'élément de transmission allongé étant configuré pour supporter au moins partiellement les seconds rouleaux (5).

4. Dispositif de transport à rouleaux (1) selon l'une quelconque des revendications précédentes, dans lequel les premiers rouleaux (3) ont chacun un arbre (11) respectif ; le premier système d'actionnement (6) comprend au moins un élément de transmission allongé ; l'élément de transmission allongé étant configuré pour supporter au moins partiellement (au moins) le premier rouleau (3) le plus proche des seconds rouleaux (5).

5. Dispositif de transport à rouleaux (1) selon l'une quelconque des revendications précédentes, dans lequel le deuxième système d'actionnement (14) est configuré pour faire tourner sur eux-mêmes au moins la plupart des seconds rouleaux (5) disposés le long du trajet de transport (P) .

6. Dispositif de transport à rouleaux (1) selon l'une quelconque des revendications précédentes, dans lequel le deuxième système d'actionnement (14) est configuré pour faire tourner sur eux-mêmes tous les seconds rouleaux (5) disposés le long du trajet de transport (P).

7. Dispositif de transport à rouleaux (1) selon l'une quelconque des revendications précédentes, dans lequel les seconds rouleaux (5) ont chacun un arbre (11) respectif, qui est pourvu, au moins à une extrémité (12), d'une douille dentée (15) ; en particulier, le deuxième système d'actionnement (14) comprend un élément loculaire motorisé, qui transmet, par couplage mécanique entre l'élément loculaire et les douilles dentées (16), un mouvement de rotation aux seconds rouleaux (5) disposés le long du trajet de transport (P).

8. Dispositif de transport à rouleaux (1) selon l'une quelconque des revendications précédentes et comprenant un quatrième système d'actionnement (17), qui est configuré pour faire tourner sur eux-mêmes les premiers rouleaux (3) ; en particulier, les premiers rouleaux (3) ont chacun un arbre (11) respectif, qui est pourvu, au moins à une extrémité (12), d'une douille lisse (18) ; en particulier, le quatrième système d'actionnement (17) comprend une courroie motorisée (19), qui transmet un mouvement rotatif par friction entre la courroie (19) et la douille lisse (18) de chaque premier rouleau (3) du convoyeur à rouleaux (2).

9. Dispositif de transport à rouleaux (1) selon l'une quelconque des revendications précédentes, dans lequel le pas entre les premiers rouleaux (3) et entre les seconds rouleaux (5) disposés le long du trajet de transport (P) est sensiblement constant.

10. Machine de raccordement (20) reliant une unité de chargement à une unité de déchargement et comprenant un dispositif de transport à rouleaux (1) selon l'une quelconque des revendications précédentes.

11. Machine de raccordement (20) selon la revendication 10 et comprenant une unité de traitement pour traiter les articles à transporter et, en particulier, un convoyeur à rouleaux de décharge (24) pour trier les articles traités.

12. Machine de raccordement (20) selon les revendications 10 ou 11 et comprenant un premier système de désengagement (25), qui est configuré pour déplacer le dispositif de transport à rouleaux (1) d'une position de mise en prise à une position de désengagement ; en particulier, la position de mise en prise est sensiblement horizontale et la position de désengagement est sensiblement verticale ; en particulier, le premier système de désengagement (25) est configuré pour déplacer le dispositif de transport à rouleaux (1) au moyen d'une rotation autour d'un axe (A1), qui est transversal au trajet de transport (P).

13. Machine de raccordement (20) selon la revendication 12 et comprenant un second système de désengagement (26), qui est configuré pour déplacer le convoyeur à rouleaux de décharge (24) d'une position de mise en prise à une position de désengagement ; en particulier, la position de mise en prise est sensiblement horizontale et la position de désengagement est sensiblement verticale ; en particulier, le second système de désengagement (26) est configuré pour déplacer le convoyeur à rouleaux de décharge (24) au moyen d'une rotation autour d'un axe (A2), qui est transversal au trajet de transport (P).

14. Installation pour la production d'articles, comprenant un dispositif de transport à rouleaux (1) selon l'une quelconque des revendications 1 à 9 ;
en particulier, l'installation comprend une machine de raccordement (20) selon l'une quelconque des revendications 10 à 13.

15. Procédé d'extension d'un dispositif de transport à rouleaux (1) selon l'une quelconque des revendications 1 à 9 ; dans lequel
le convoyeur à rouleaux (2) est disposé dans la zone d'une première unité de traitement ; dans lequel
le dispositif d'extension (4) est disposé dans la zone d'une seconde unité de traitement ; dans lequel
le procédé comprend :
une étape d'extension, au cours de laquelle le premier système d'actionnement (6) déplace les seconds rouleaux (5) de manière à faire varier la longueur (L) du trajet de transport (P) et du dispositif de transport à rouleaux (1) en modifiant, en aval ou en amont, le convoyeur à rouleaux (2),
le nombre de seconds rouleaux (5) le long du trajet de transport (P).
